# EUROPÄISCHE PATENTANMELDUNG

(11) **EP 0 687 493 A2**
(43) Veröffentlichungstag der Anmeldung: **20.12.1995**
(21) Anmeldenummer: 95105073.1
(22) Anmeldetag: 05.04.1995
(51) Int. Cl.: B01D 29/27, B01D 29/92, B01D 35/12, B01D 29/23, B01D 36/00

(54) **Abscheideanlage für vorwiegend mit organischen Stoffen verschmutzte Abwässer**

(30) Priorität: 17.06.1994 DE 9409815 U
(71) Anmelder: PASSAVANT-WERKE AG, D-65322 Aarbergen 7 (DE)
(72) Erfinder: Bachon, Ulrich, D-65582 Diez/Lahn (DE); Helffenstein, Kurt, D-65582 Diez/Lahn (DE)

(57) **Zusammenfassung**

Abscheider für vorwiegend mit organischen Stoffen verschmutzte Abwässer müssen in kurzen Zeitabständen entsorgt werden. Die Trennstoffe werden abgezogen und in einem Sammelgefäß zwischengelagert, bis sie zur Wiederaufarbeitung gebracht werden. Die Trennstoffe haben einen hohen Wassergehalt, der bis zum Abtransport gesenkt werden muß. Das Sammelgefäß besitzt deshalb ein beim Zulauf beaufschlagtes Filter. Unterhalb des Filters sammelt sich das abgetrennte Filtrat. Im Filtratraum ist eine Pumpe vorgesehen, die das Filtrat zurück in den Abscheider fordert. Das Filter ist vorzugsweise als Einweg-Filterbeutel ausgebildet, der mit den entwässerten Trennstoffen abtransportiert wird.

## Beschreibung

Die Neuerung bezieht sich auf eine Abscheideranlage nach dem Oberbegriff von Anspruch 1, wie sie z.B. in DE-A-41 04 172 dargestellt ist.

Abscheideranlagen dieser bekannten Art bestehen aus einem Abscheidebehälter, in dem die Trennung der Abwasserinhaltsstoffe von dem Abwasser stattfindet, und aus mindestens einem Sammelbehälter, in den die abgetrennten Stoffe (Sink-und Schwimmstoffe) durch gesteuerte Abzugsöffnungen überführt werden können. Der Hintergrund dieser neuen Abscheide- und Abzugstechnik ist, daß die Trennstoffe in möglichst frischem Zustand gewonnen werden sollen, damit sie zu anderen Wertstoffen, z.B. Futtermitteln, aufgearbeitet werden können.

Deshalb arbeitet der Abscheidebehälter ohne Freispiegel, d.h. luftfrei, und auch der Sammelbehälter erhält vorzugsweise eine Einrichtung, die kein Luftpolster über den abgezogenen Trennstoffen zuläßt. Luftzutritt beschleunigt die Umsetzung der organischen Trennstoffe in nicht oder schwierig aufarbeitbare Abbauprodukte.

Die abgezogenen Trennstoffe haben beim Abzug noch einen relativ hohen Wassergehalt. Um diesen ebenfalls noch abzutrennen, wurde in DE-A-41 01 172 bereits vorgeschlagen den Sammelbehälter mit einer Filtereinrichtung auszurüsten und für das Filtrat eine Ableitung vorzusehen. Gelöst ist jedoch noch nicht die Frage, wie die Filtereinrichtung konkret aussehen soll und wie die Ableitung des Filtrats aus der Filtereinrichtung vonstatten gehen soll. Diese Aufgabe wird neuerungsgemäß durch eine in dem Filtratsammelteil der Filtereinrichtung vorgesehene Pumpe gelost, die förderseitig mit dem Zulauf zum Abscheidebehälter verbunden ist. Der Durchlauffilter ist vorzugsweise als in eine Halterung eingehängter Filtersack oder -beutel ausgebildet und läßt sich demnach im gefüllten Zustand leicht entnehmen. Das Filtrat wird ebenfalls problemlos beseitigt, indem es dem Abscheidegefäß durch die Pumpe erneut zugeleitet wird. Dies geschieht vorzugsweise automatisch durch einen Schwimmerschalter, der auf den Spiegel im Sammelbehälter anspricht. Der Filterbeutel oder -sack liegt vorteilhafterweise auf einer unteren Abstützung auf, die herausnehmbar ist. Die Ringhalterung für den Filtersack ist ebenfalls herausnehmbar. Dies dient dem besseren Zugang zu der Pumpe zwecks Kontrolle, Wartung und Reparatur. Der Filterbeutel besteht vorzugsweise aus einem organischen Material, wie z. B. aus Proteinen, die sich bei Erhitzen des gesammelten Fetts mit auflösen. In weiterer Ausgestaltung der Neuerung wird vorgeschlagen, für die beiden Trennstoffe je einen Filtersack vorzusehen. Auf diese Weise können die beiden Trennstoffe unmittelbar nacheinander abgezogen werden, ohne dazwischen den Filtersack zu wechseln. Das in beiden Filtern anfallende Filtrat wird in einem gemeinsamen Pumpenraum gesammelt.

Weitere Ausgestaltungen der Neuerung sind den Abbildungen, die bevorzugte Ausbildungsformen darstellen, und ihrer Beschreibung zu entnehmen. Es zeigen:
Fig. 1 eine Abscheideranlage mit einer Filtertrenneinrichtung;
Fig. 2 eine Abscheideranlage mit zwei Filtertrenneinrichtungen;
Fig. 3 eine andere Ausführungsform einer Filtertrenneinrichtung.

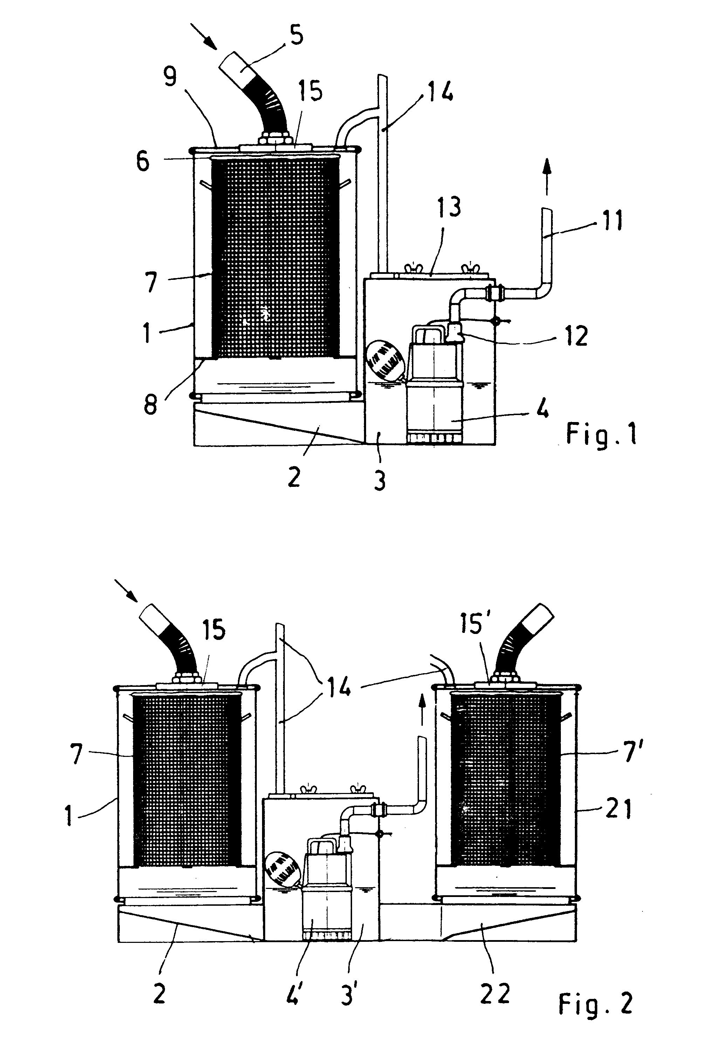

Die Einrichtung nach Fig. 1 besteht aus einem Filtergehäuse 1 mit Filtratsammelraum 2 und einem Pumpenraum 3 mit Filtratförderpumpe 4. In dem Filtergehäuse ist unter dem Zulaufschlauch 5 ein Filtersack 6 angeordnet, der in einen Lochsiebkäfig 7 eingehängt ist. Der Siebkäfig 7 stützt sich unten auf vorspringenden Laschen 8 ab. Sobald der Filtersack gefüllt ist, wird er - nach Abnehmen des Deckels 9 - herausgehoben und in einen Transportkübel gelegt.

Die Filtratförderpumpe 4, die in dem Filtratsammelraum 3 steht, ist als Tauchpumpe mit Schwimmerschalter 10 ausgebildet. Die Förderleitung 11 ist seitlich aus dem Gehäuse herausgeführt und mit einer Schnellkupplung 12 versehen, so daS sie durch den Deckel 13 ein- und ausgebaut werden kann. Beide Räume sind an eine gemeinsame Entlüftungsleitung 14 angeschlossen.

Bei der Einrichtung nach Fig. 2 ist auf der anderen Seite des Pumpenraums 3' ein zweites Filtergehäuse 21 vorgesehen, das spiegelbildlich zu dem ersten ausgebildet ist. Der Filtratsammelraum 22 ist mit dem gemeinsamen Pumpenraum 3' verbunden. Mit dieser Einrichtung können die aus dem Abscheider abgezogenen Trennstoffe unmittelbar nacheinander entnommen und dabei entwässert werden. Beide Filtergehäuse besitzen oben Schaugläser 15, 15' durch die der Füllgrad der Filtersäcke festgestellt werden kann.

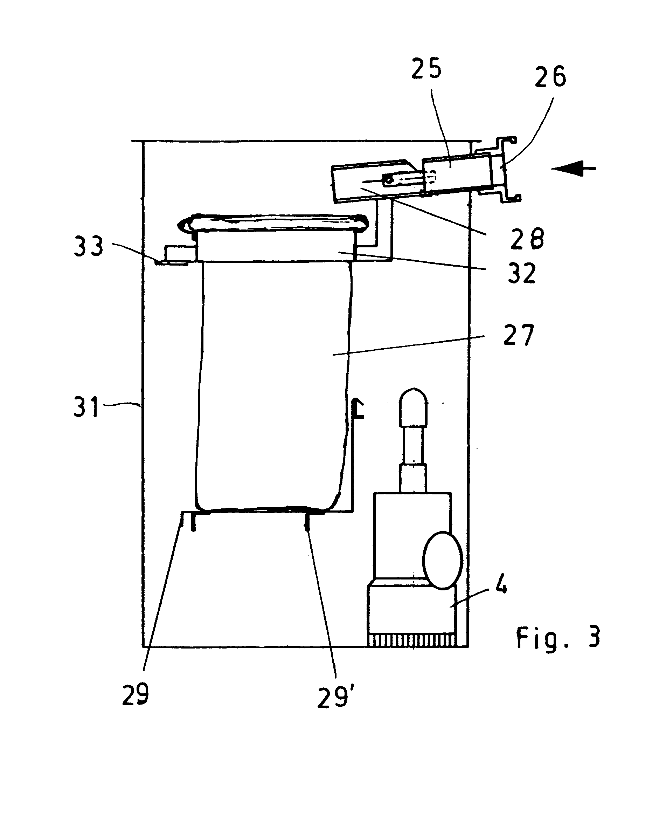

Bei der Ausführungsform nach Fig. 3 ist der Zulauf 25 in die Filtereinrichtung 31 seitlich angeordnet. Der Schlauchanschluß 26 ist als Schnellkupplung ausgebildet. Der Zulauf mündet über dem Filtersack 27 in Form eines nach oben klappbaren Rohrstücks 28. Für den Filtersack gibt es unten mehrere aushebbare Auflagen 29, weil ein Lochsiebkäfig nicht vorhanden ist. Der Filtersack 27 hängt hier in einem Stützring 32, dessen Gestell in Auflagelaschen 33 eingehängt wird.

## Patentansprüche

1. Abscheideranlage für mit vorwiegend organischen Stoffen verschmutzte Abwässer, enthaltend ein Abscheidebehälter mit Zu- und Reinwasserablauf und gesteuerten Abzugsöffnungen für die Trennstoffe, sowie mindestens einen an die Abzugsöffnungen angeschlossenen Sammelbehälter für die Trennstoffe, wobei der Sammelbehälter ein Durchlauffilter für die abgezogenen Trennstoffe und eine Ablaufleitung für das Filtrat aufweist gekennzeichnet durch eine in dem Filtratsammelteil (3, 3') vorgesehene Pumpe (4), die förderseitig (11) mit dem Zulauf zum Abscheidebehälter verbunden ist.

2. Abscheideranlage nach Anspruch 1, dadurch gekennzeichnet, daß das Durchlauffilter als Filtersack (7, 27) oder -beutel ausgebildet ist, der in eine Halterung (32) über der Pumpe (4) eingehängt ist.

3. Abscheideranlage nach Anspruch 2, dadurch gekennzeichnet, daß der Filtersack oder -beutel (27) unten auf herausnehmbaren Stützen (29) aufliegt.

4. Abscheideranlage nach Anspruch 2 oder 3, dadurch gekennzeichnet, daß die Halterung (32) für den Filtersack oder -beutel (28) herausnehmbar abgestützt ist.

5. Abscheideranlage nach Anspruch 1 bis 4, dadurch gekennzeichnet, daß der Zulauf (25) zum Filtersack oder -beutel (27) schräg seitlich verläuft und daß das über den Filtersack oder -beutel ragende Endstück (28) nach oben wegschwenkbar ist.

6. Abscheideranlage nach Anspruch 1 bis 5, dadurch gekennzeichnet, daß zwei Filtersäcke oder -beutel (7, 7') für die abgezogenen Schwimm- und Sinkstoffe und eine zwischen ihnen angeordnete gemeinsame Pumpe (4') vorgesehen sind.

7. Abscheideranlage nach Anspruch 6, gekennzeichnet durch eine gemeinsame Entlüftung (14) für die beiden Filterräume (2, 22) und den Pumpenraum (3').

8. Abscheideranlage nach einem oder mehreren der Ansprüche 2 bis 5, dadurch gekennzeichnet, daß der Filtersack aus organischem Material besteht.

9. Abscheideranlage nach Anspruch 8, dadurch gekennzeichnet, daß als organisches Material Protein verwendet wird, das sich bei Erhitzung auflöst.
